# EUROPÄISCHE PATENTSCHRIFT

(11) **EP 1 571 411 B1**
(45) Veröffentlichungstag und Bekanntmachung des Hinweises auf die Patenterteilung: **03.01.2007**
(21) Anmeldenummer: 05000765.7
(22) Anmeldetag: 15.01.2005
(51) Int. Cl.: G01B 5/00

(54) **Messeinrichtung**
Measuring Apparatus
Dispositif de mesure

(30) Priorität: 02.03.2004 DE 102004010033
(43) Veröffentlichungstag der Anmeldung: 07.09.2005
(73) Patentinhaber: Dr.Ing. h.c.F. Porsche Aktiengesellschaft, 70435 Stuttgart (DE)
(72) Erfinder: Starck, Michael, 73061 Ebersbach (DE); Kürth, Stefan, 75417 Mühlacker (DE); Holzinger, Fritz, 71263 Weil Der Stadt (DE)

(56) Entgegenhaltungen:
- EP-A- 0 880 007
- EP-A- 0 902 251
- WO-A-97/12197
- US-A- 4 549 359

## Beschreibung

Die Erfindung bezieht sich auf eine Messeinrichtung zur stationären Anordnung von mindestens einem Mehrgelenk-Messarm nach dem Oberbegriff des Anspruchs 1.

Aus der EP 0 730 210 B1 bzw. der EP 0 880 007 A2 ist ein dreidimensionales Koordinatenmessgerät bekannt, das aus einem Messarm mit mehreren Freiheitsgraden besteht. Dieser Messarm umfasst einen handbedienten Mehrgelenkarm mit einem Fuß, der elektronisch mit einer seriellen Box und einem Hostcomputer verbunden ist. Der Messarm kommuniziert elektronisch mit der seriellen Box, welche wiederum elektronisch mit dem Hostcomputer kommuniziert. Dieser Messarm ist auf einem transportablen Ständer gehalten, der mit Befestigungsvorrichtungen versehen ist. Des Weiteren ist aus der DE 101 12 653 A1 ein System zur Positionspeilung von dreidimensionalen Messvorrichtungen oder Bearbeitungsvorrichtungen in einem festen Bezugssystem bekannt, wobei die Vorrichtung auf einer ebenen Tragwand angeordnet ist, die mit einer Mehrzahl von integrierten interaktiven Fassungen versehen ist.

Aufgabe der Erfindung ist es, eine Messeinrichtung zur stationären Anordnung von mindestens einem Mehrgelenk-Messarm eines Koordinaten-Messsystems zu schaffen, die eine genaue und nicht von äußeren Einflüssen beeinträchtigte Messung in einem großen Teilbereich eines Fahrzeugs (Interieur sowie Exterieur) sowie an größeren Bauteilen oder Baugruppen ohne Verlust eines ursprünglich erzielten Koordinatenbezugs ermöglicht, wobei ein lageeindeutiger, reproduzierbarer Wechsel des Messarms gewährleistet ist.

Diese Aufgabe wird erfindungsgemäß durch die Merkmale des Anspruchs 1 gelöst. Weitere vorteilhafte Merkmale beinhalten die abhängigen Ansprüche.

Die mit der Erfindung hauptsächlich erzielten Vorteile bestehen darin, dass die Messung im Koordinaten-Messsystem über den Messarm aufgrund der festen stationären Anordnung von Messarm-Aufnahmen bzw. Messdosen auf einer speziell abgestützten Bodenplatte, die beispielsweise als Betonplatte ausgeführt sein kann, unverfälschte Messergebnisse ergibt. Hierzu sind die Messarm-Aufnahmen auf oder in der Bodenplatte und/oder über eingelassene Träger eines Grundrahmens abgestützt gehalten. Der Grundträger ist mit einem Tragrahmen zur Aufnahme der Arbeitsplattform zu einer Einheit verbunden, wobei die Messarm-Aufnahmen um das Fahrzeug herum beabstandet oder unter dem Fahrzeug angeordnet sind. Der Messarm ist in einer Messarm-Aufnahme, die aus einer Messdose gebildet wird, in einem gleichen Koordinatensystem in X-, Y- und Z-Richtung in einer eindeutig reproduzierbaren Position verdrehsicher und lageeindeutig in der Messarm-Aufnahme bzw. in der Messdose mittels einer Spann- und Fixiereinrichtung einsetzbar und gehalten.

Hierdurch wird in vorteilhafter Weise nach der Erfindung eine Vergrößerung des Messvolumens des Messarmes erzielt, da der Messarm entsprechend der Anzahl der Messarm-Aufnahmen bzw. der Messdosen variabel einsetzbar ist und über die Messeinrichtung in jeder Messarm-Aufnahme bzw. in jede Messdose in gleicher Weise lagegenau einsetzbar ist, so dass der Koordinatenbezug in jeder Messdose ein gleicher ist.

Insbesondere ist nach der Erfindung vorgesehen, dass die Bodenplatte aus einer Betonplatte besteht, die unter Zwischenschaltung einer wärme- und schwingungsisolierenden Dämmschicht in einer Betonwanne angeordnet ist und ein unterer Flansch eines Doppel-T-Trägers des Grundrahmens in der Betonplatte eingelassen gehalten ist und auf dem abgekehrten freien Flansch des Doppel-T-Trägers die Messarm-Aufnahmen bzw. die Messdosen aufliegen und über Abstützungen auf der Bodenplatte lagesicher gehalten sind. Ferner ist mit dem Tragrahmen, welcher aus Längs- und Querstreben besteht, der Grundrahmen sowie ein mit der Betonwanne verbundener umlaufender Aufnahmerahmen für die Arbeitsplattform vorgesehen, für einen nach oben "offenen" Aufbau, welcher ein jederzeitiges Öffnen und Modifizieren erlaubt. Hierdurch wird in vorteilhafter Weise erreicht, dass die Messwertaufnahmen bzw. die Messdosen mit einfachen Mitteln auf einer steifen Betonplatte anzuordnen sind, die zudem entkoppelt von der angrenzenden Umgebung sind.

Die Messarm-Aufnahmen bzw. Messdosen sind unmittelbar benachbart des auf der Arbeitsplattform angeordneten Fahrzeugs an jeder Fahrzeugseite sowie am Fahrzeugheck und am Fahrzeugbug in einer gleichen horizontalen Ebene angeordnet. Hierdurch ist sichergestellt, dass der Messarm ebenfalls in jeder Messarm-Aufnahme bzw. Messdose gleich zum Messobjekt orientiert ist und nur ein mit einer definierten und bekannten Messunsicherheit behafteter Fehler auftritt.

In der Messarm-Aufnahme bzw. Messdose ist eine Spann- und Fixiereinrichtung angeordnet, die einen Sicherungszapfen gegen Verdrehung und zwei auf einem Kreis gegenüberliegend angeordnete Fixierzapfen aufweist, wobei der Sicherungszapfen und die Fixierzapfen in korrespondierende Bohrungen des Messarmfußes eingreifen. Durch diese Fixiereinrichtung wird eine lagegenaue Positionierung erreicht. Die Spannvorrichtung ist pneumatisch (alternativ mechanisch) betätigbar und weist einen am Messarmfuß angeordneten zentrischen Zapfen auf, der in eine mit diesem korrespondierende Aufnahme gezogen und festgesetzt wird. Die Festsetzung des zentrischen Zapfens erfolgt durch ein zuvor vorgenommenes genaues Positionieren über die Fixierzapfen und den Sicherungszapfen, so dass hierdurch die lageeindeutige Anordnung des Messarmfußes zur Messarm-Aufnahme bzw. zur Messdose gewährleistet ist und bei einem Umsetzen des Messarmes die einmal eingemessene Position reproduzierbar ist. Hierzu sind die Bohrungen im Messarmfuß für die Fixierzapfen der Messdose geringfügig versetzt zu den Fixierzapfen angeordnet und es wird eine federnde, elastisch reversible Klemmung erzielt und über die pneumatische Spanneinrichtung wird der zentrische Zapfen am Messarmfuß mittels Spannelemente der Einrichtung in die Messdose unter Klemmung in eine spielfreie Halteposition hineingezogen und gehalten.

Zum Einmessen des Fahrzeugs in ein sogenanntes globales Fahrzeug-Koordinatensystem werden in das auf der Arbeitsplattform als Analyseplatz stehende Fahrzeug an seiner Unterfläche Messdorne zur Einmessung in ein Fahrzeug-Koordinatensystem eingebracht, das mit einem Koordinatensystem der Messarm-Aufnahmen bzw. der Messdosen und einem Koordinatensystem des Messarmes in dem globalen Fahrzeugkoordinatensystem zusammenfassbar ist und die Messdaten ausgebbar sind.

Ein Ausführungsbeispiel der Erfindung ist in den Zeichnungen dargestellt und wird im folgenden näher beschrieben.

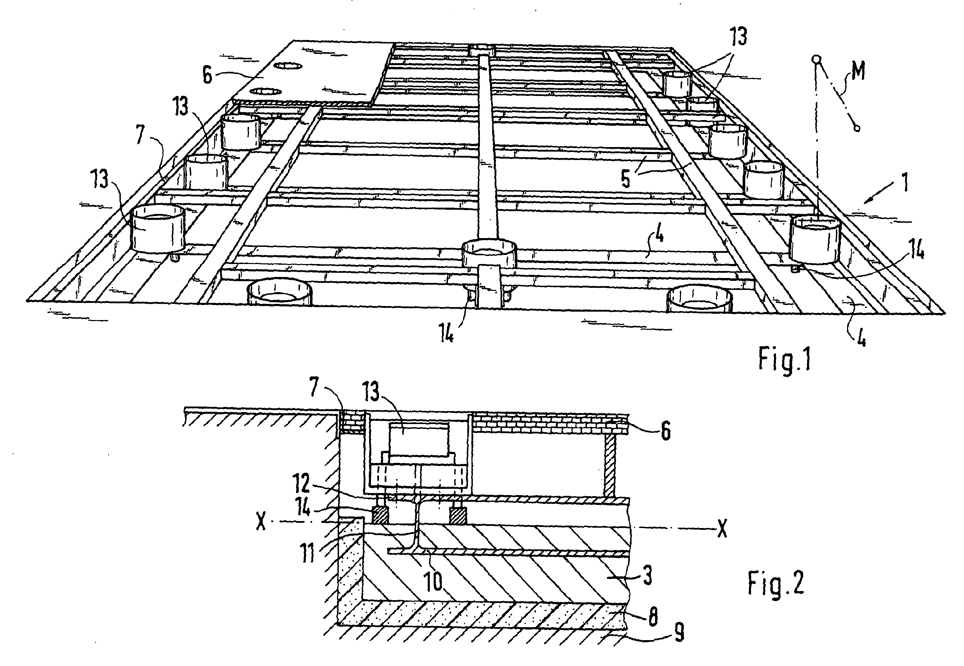

Es zeigen
- Fig. 1: eine schaubildliche Darstellung eines Fahrzeug-Analyseplatzes mit auf einer mit einem Grund- und Trägergestell versehenen Betonplatte mit Messarm-Aufnahmen bzw. Messdosen, die auf einer Betonwanne abgestützt sind, welche einen rundum verlaufenden Tragrand für eine Aufnahmeplattform (nicht dargestellt) des Fahrzeugs aufweisen,
- Fig. 2: einen Schnitt durch die Betonplatte mit Grund- und Traggestell und Messarm-Aufnahmen bzw. Messdosen,

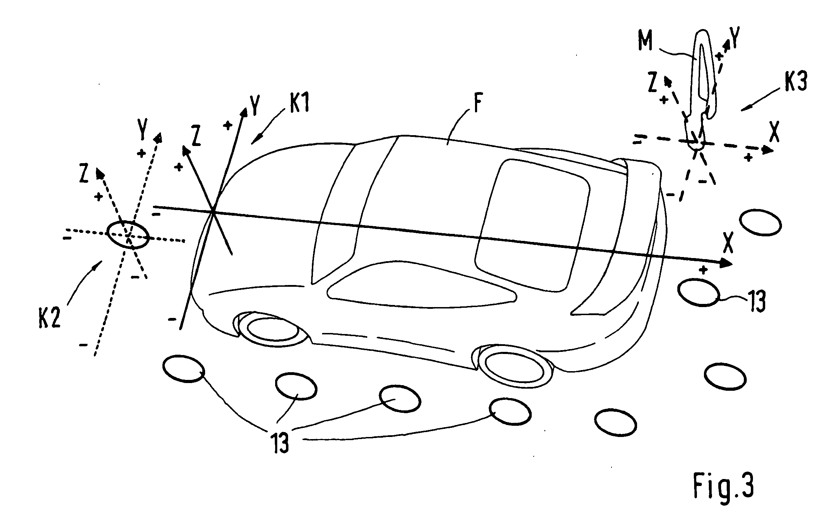

- Fig. 3: eine schematische Darstellung von Koordinatensystemen des Messarmes, der Aufnahmeplattform bzw. der Messarm-Aufnahmen und des Fahrzeugs,

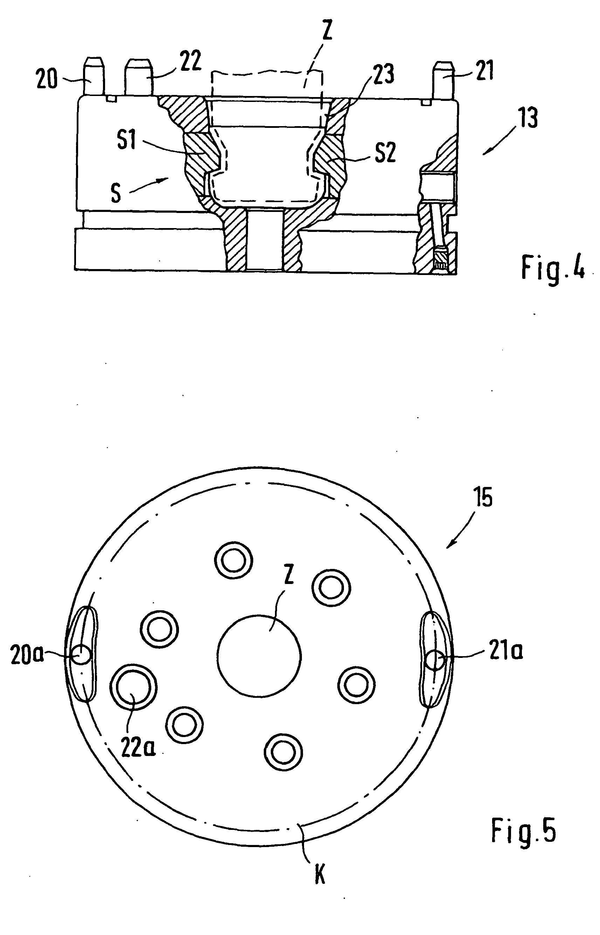

- Fig. 4: einen Schnitt durch eine Spann- und Fixiereinrichtung einer Messarm-Aufnahme bzw. einer Messdose und
- Fig. 5: eine Unteransicht auf einen Messarmfuß.

Zur schnellen und aussagekräftigen Messung von Fahrzeugbauteilen in einem Gesamtkoordinatensystem des Fahrzeugs F und auch im Zusammenhang mit angrenzenden Bauteilen des Fahrzeugs wird ein Messarm M eines elektronischen Messsystems verwendet. Dieser Messarm M kann auf einer Messeinrichtung 1 mit einem Analyseplatz für ein Fahrzeug in Messarm-Aufnahmen 13 bzw. in sogenannten Messdosen über eine Spann- und Fixiereinrichtung S eingesetzt werden.

Die Messeinrichtung 1 umfasst im Wesentlichen einen Messarm M bzw. einen Mehrgelenk-Messarm, der auf einer Bodenplatte 3, die beispielsweise als Betonplatte oder auch in anderer Weise ausgeführt sein kann und welche in einer Betonwanne 9 angeordnet ist, wobei die Betonplatte einen Grundrahmen 4 und einen Tragrahmen 5 aufweist, der eine Arbeitsplattform 6 trägt, die randseitig in einem wannenseitigen Aufnahmerahmen 7 gehalten wird. Auf der Arbeitsplattform 6 ist ein Fahrzeug F zur Messung angeordnet.

Die Betonplatte 3 ist unter Zwischenschaltung einer wärme- und schwingungsisolierenden Dämmschicht 8 in der Betonwanne 9 gelagert. Die Betonplatte 3 ist mit einer Armierung versehen und weist eingebettet einen unteren Flansch 10 eines Doppel-T-Trägers 11 auf. Ein freier überstehender Flansch 12 des Doppel-T-Trägers 11 trägt und stützt eine Messarm-Aufnahme 13 ab, welche aus einer Messdose besteht. Die Bodenplatte 3 kann auch ohne Rahmenwerk 4, 5 ausgeführt sein, sie muss nur die Kriterien einer starren unveränderlichen Lage aufweisen, so dass entsprechend starre, unveränderliche Positionen abgebildet werden können.

Da die Messdose teilweise über die Auflagefläche des Grundrahmens 4 hervorragt, sind zusätzliche Abstützungen 14 vom Boden der Messdose bis zur Betonplatte vorgesehen, die eine stabile Abstützung gegen eine Kippung gewährleisten. Die Arbeitsplattform 6 deckt die Betonplatte 3 von oben her vollständig ab und weist für die Zugänglichkeit zu den Messdosen 13 entsprechende Öffnungen in der Arbeitsplattform 6 auf, durch die der Messarmfuß 15 zum Verbinden und fixieren über eine Spann- und Fixiereinrichtung S in der Messdose 13 einsteckbar und gehalten wird, wobei die Spanneinrichtung pneumatisch betätigbar ist.

Zum Verbinden des Messarmfußes 15 mit der Messdose 13 sind an dieser auf einem Kreis K gegenüberliegende Fixierzapfen 20, 21 angeordnet, die in Bohrungen 20a, 21a des Messarmfußes 15 eingreifen. Des Weiteren ist ein Sicherungszapfen 22 an der Messdose 13 vorgesehen, der in eine korrespondierende Bohrung 22a des Messarmfußes 15 eingreift. Damit eine spielfreie Verbindung zwischen der Messdose 13 und dem Messarmfuß 15 herstellbar ist, sind die Fixierzapfen 20, 21 gegenüber den entsprechenden Bohrungen 20a, 21a geringfügig derart versetzt angeordnet, dass beim Aufsetzen eine verdrehsichere Klemmposition erzielt wird. Durch Betätigung der Spanneinrichtung S und von integrierten Spannbacken S1 und S2 wird ein Zapfen Z des Messarmfußes 15, der in gestrichelten Linien dargestellt ist, in die Aufnahme 23 der Messdose 13 hineingezogen. Der Sicherungszapfen 22 dient zur Absicherung gegen ein 180° verdrehtes Einsetzen des Messarmfußes 15.

Zu einem auf der Arbeitsplattform 6 stehendem Fahrzeug F sind rundherum Messarm-Aufnahmen 13 bzw. Messdosen angeordnet, in die der Messarm M mit seinem Messarmfuß 15 einsetzbar ist. Durch die Fixierzapfen 20, 21 und durch den Sicherungszapfen 22 wird ein lageeindeutiger, reproduzierbarer Wechsel des Messarmes M von einer Messdose 13 zu einer anderen Messdose erreicht, wodurch eine Vergrößerung des Messvolumens des Messarmes M geschaffen wird und somit zusätzlich auch Innenraumvermessungen ggf. auch in schwer zugänglichen Bereichen des Fahrzeugs Messungen vorzunehmen sind.

Die Messeinrichtung 1 verfügt über die Messarm-Aufnahmen 13, dem Messarm M und durch an der Unterfläche des Fahrzeugs angeordnete Messdorne drei für sich jeweils starre Koordinatensysteme; zunächst das Maschinenkoordinatensystem des Messarmes M, dann das Koordinatensystem der Arbeitsfläche (Messarm-Aufnahmen 13) sowie das Koordinatensystem des Fahrzeugs F. Dieses entwickelte Konzept ermöglicht es, das Maschinen-Koordinatensystem und das Koordinatensystem der Arbeitsfläche über einen einmaligen Einmessvorgang elektronisch zusammenzuführen und in der Messsoftware zu hinterlegen, das heißt, ein auf die Arbeitsfläche bzw. Arbeitsplattform 6 gefahrenes und festgesetztes Messobjekt, wie ein Fahrzeug, kann insgesamt im globalen Fahrzeugkoordinatensystem ausgerichtet, das heißt, Zusammenführung der drei Koordinatensysteme, und anschließend vermessen und auf dem Computer ausgegeben werden. Dabei kann frei über die Adoptionsstellen bzw. über die Messarm-Aufnahmen 13 um das Fahrzeug F herum gemessen werden, je nach gestellter Messaufgabe, wodurch eine Vergrößerung des Messvolumens des Messarms M erzielt wird.

## Patentansprüche

1. Messeinrichtung mit einer stationären Anordnung von mindestens einem Mehrgelenk-Messarm (M) in einem Koordinaten-Messsystem auf einer Arbeitsplattform, die ein Fahrzeug (F) Bauteile oder Baugruppen aufnimmt, und zur Messung der Messarm (M) in Messarm-Aufnahmen (13) einer mit der Arbeitsplattform verbundenen Bodenplatte (3) gehalten und zu Messpunkten am Fahrzeug (F) der Messarm (M) frei ausrichtbar ist, **dadurch gekennzeichnet, dass** die Messarm-Aufnahmen (13) auf oder in der Bodenplatte (3) gehalten sind, die eine Arbeitsplattform (6) aufnimmt und mit dieser eine Einheit bildet und dass die Messarm-Aufnahmen (13) um das Fahrzeug (F) herum beabstandet oder unter dem Fahrzeug angeordnet sind und dass der Messarm (M) in jeder Messarm-Aufnahme (13), welche aus einer Messdose besteht, in einem gleichen Koordinatensystem in X-, Y-, Z-Richtung über eine Spann- und Fixiereinrichtung (S) in einer eindeutig reproduzierbaren Position verdrehsicher und lageeindeutig in der Messarm-Aufnahme (13) bzw. in der Messdose einsetzbar und gehalten ist.

2. Messeinrichtung nach Anspruch 1, **dadurch gekennzeichnet, dass** die Bodenplatte (3) aus einer Betonplatte besteht und unter Zwischenschaltung einer wärme- und schwingungsisolierenden Dämmschicht (8) in einer Betonwanne (9) angeordnet und mit einem Grundrahmen (4) verbunden ist und ein unterer Flansch (10) eines Doppel-T-Trägers (11) des Grundrahmens (4) in der Betonplatte eingelassen gehalten ist und auf dem abgekehrten freien Flansch (12) des Doppel-T-Trägers (11) die Messarm-Aufnahmen (13) bzw. die Messdosen aufliegen und über Abstützungen (14) unmittelbar auf der Betonplatte lagesicher gehalten werden.

3. Messeinrichtung nach Anspruche 2, **dadurch gekennzeichnet, dass** mit einem aus Längs- und Querstreben bestehenden Tragrahmen (5) der Grundrahmen (4) sowie ein mit der Betonwanne (9) verbundener umlaufender Aufnahmerahmen (7) für die Arbeitsplattform (6) vorgesehen ist.

4. Messeinrichtung nach den Ansprüchen 1, 2 oder 3, **dadurch gekennzeichnet, dass** die Messarm-Aufnahmen (13) bzw. die Messdosen unmittelbar benachbart des auf der Arbeitsplattform (6) angeordneten Fahrzeugs (F) an jeder Fahrzeugseite sowie am Fahrzeugheck und am Fahrzeugbug in einer gleichen horizontalen Ebene (X-X) angeordnet sind.

5. Messeinrichtung nach den Ansprüchen 1, 2, 3 oder 4, **dadurch gekennzeichnet, dass** die Messarm-Aufnahmen (13) bzw. die Messdosen einen Messarmfuß (15) des Messarmes (M) aufnehmen, der über die Spann- und Fixiereinrichtung (S) in der Messarm-Aufnahme (13) festsetzbar ist sowie mittels eines Sicherungszapfens (22) gegen Verdrehung gesichert und über zwei auf einem Kreis (K) gegenüberliegend angeordnete Fixierzapfen (20, 21) lagegenau gehalten ist, wobei der Sicherungszapfen (22) und die Fixierzapfen (20, 21) in korrespondierende Bohrungen (20a, 21a, 22a) des Messarmfußes (15) eingreifen.

6. Messeinrichtung nach Anspruch 5, **dadurch gekennzeichnet, dass** die Bohrungen (20a, 21a) im Messarmfuß (15) für die Fixierzapfen (20, 21) derart geringfügig versetzt zu diesen angeordnet sind, dass die Zapfen (20, 21) in den Bohrungen (20a, 21a) klemmend angeordnet sind und über die pneumatische Spann- und Fixiereinrichtung (S) mittels gegenüberstehenden Spannelementen (S1, S2) der Messarmfuß (15) in die Messarm-Aufnahme (13) bzw. die Messdose in eine Festsetzposition hineinziehbar ist.

7. Messeinrichtung nach Anspruch 1, **dadurch gekennzeichnet, dass** das auf der Arbeitsplattform (6) stehende Fahrzeug (F) an seiner Unterfläche Messdorne zur Einmessung in ein Fahrzeug-Koordinatensystem (K1) aufweist, das mit einem Koordinatensystem (K2) der Messarm-Aufnahmen (13) bzw. der Arbeitsplatzform (6) und einem Koordinatensystem (K3) des Messarmes (M) in einem globalen Fahrzeugkoordinatensystem zusammenfassbar und die Messdaten ausgebbar sind.

## Claims

1. A measuring apparatus with a stationary arrangement of at least one multijoint measuring arm (M) in a co-ordinate measuring system on a working platform which receives a vehicle (F), components or sub-assemblies, and for measurement the measuring arm (M) is held in measuring-arm receptacles (13) of a base plate (3) connected to the working platform and can be freely aligned with measuring points on the vehicle (F), **characterised in that** the measuring-arm receptacles (13) are held on or in the base plate (3), which receives a working platform (6) and together therewith forms a unit, and **in that** the measuring-arm receptacles (13) are spaced around the vehicle (F) or arranged below the vehicle, and **in that** the measuring arm (M) in each measuring-arm receptacle (13), which comprises a load cell, is insertable into and held in the measuring-arm receptacle (13) or in the load cell in a specifically reproducible position in a rotationally fixed manner and in a defined location by a clamping and fixing device (S) in the same co-ordinate system in X, Y and Z directions.

2. A measuring apparatus according to claim 1, **characterised in that** the base plate (3) comprises a concrete plate and is arranged in a concrete trough (9) with the interposition of a heat- and vibration-proofing insulating layer (8) and is connected to a base frame (4), and a lower flange (10) of a double T beam (11) of the base frame (4) is held embedded in the concrete plate, and the measuring-arm receptacles (13) or the load cells lie on the remote free flange (12) of the double T beam (11) and are directly held in a secure position on the concrete plate by supports (14).

3. A measuring apparatus according to claim 2, **characterised in that**, together with a supporting frame (5) comprising longitudinal and transverse struts, the base frame (4) and a circumferential receiving frame (7) connected to the concrete trough (9) are provided for the working platform (6).

4. A measuring apparatus according to claim 1, 2 or 3, **characterised in that** the measuring-arm receptacles (13) or the load cells are arranged directly adjacent to the vehicle (F), which is arranged on the working platform (6), on each vehicle side and at the rear and the front of the vehicle in the same horizontal plane (X-X).

5. A measuring apparatus according to claim 1, 2, 3 or 4, **characterised in that** the measuring-arm receptacles (13) or the load cells receive a base (15) of the measuring arm (M), which measuring-arm base (15) is securable in the measuring-arm receptacle (13) by the clamping and fixing device (S) and is secured against rotation by means of a securing pin (22) and is held in a precise position by two fixing pins (20, 21) arranged opposite one another on a circle (K), wherein the securing pin (22) and the fixing pins (20, 21) engage in corresponding bores (20a, 21a, 22a) in the measuring-arm base (15).

6. A measuring apparatus according to claim 5, **characterised in that** the bores (20a, 21a) in the measuring-arm base (15) for the fixing pins (20, 21) are arranged so as to be slightly offset in relation to the latter so that the pins (20, 21) are clamped in the bores (20a, 21a), and the measuring-arm base (15) can be drawn into a defined position in the measuring-arm receptacle (13) or the load cell by the pneumatic clamping and fixing device (S) by means of opposing clamping members (S1, S2).

7. A measuring apparatus according to claim 1, **characterised in that** the vehicle (F) standing on the working platform (6) has, on its underside, plug gauges for calibration in a vehicle co-ordinate system (K1) which can be combined with a co-ordinate system (K2) for the measuring-arm receptacles (13) or the working platform (6) and a co-ordinate system (K3) for the measuring arm (M) to form a global vehicle co-ordinate system, and the measuring data can be output.

## Revendications

1. Dispositif de mesure présentant un montage stationnaire d'au moins un bras de mesure à plusieurs articulations (M) et aménagé dans un système de mesure par coordonnées sur une plate-forme de travail qui sert à recevoir un véhicule (F), des éléments ou des ensembles, tel que le bras de mesure (M) est maintenu pour mesurer dans des réceptacles (13) prévus à cet effet dans un socle (3) relié à la plate-forme de travail et que ledit bras de mesure (M) est librement orientable par rapport aux points à mesurer sur le véhicule (F), **caractérisé en ce que** les réceptacles du bras de mesure (13) sont fixés sur ou dans le socle (3) qui reçoit une plate-forme de travail (6) avec laquelle il forme une unité et **en ce que** les réceptacles du bras de mesure (13) sont aménagés tout autour du véhicule (F) à des espacements réguliers ou disposés sous le véhicule, et **en ce que** le bras de mesure (M) est utilisable et immobilisé à l'intérieur de chaque réceptacle (13) conçu à cette fin et consistant en une cellule dynamométrique au moyen d'un dispositif de bridage et de fixation (S) dans un même système de coordonnées, orienté selon les axes X, Y et Z dans une position clairement reproductible sans possibilité de rotation et bien définie dans le réceptacle du bras de mesure (13) ou la sonde dynamométrique.

2. Dispositif de mesure selon la revendication 1, **caractérisé en ce que** le socle (3) est constitué d'une dalle de béton qui est disposée dans une cuve en béton (9) en intercalant une couche d'isolation (8) calorifuge, antivibratoire et en étant relié à un cadre de base (4) et **en ce qu'**un rebord inférieur (10) des poutrelles en double T (11) du cadre de base (4) est encastré dans la dalle de béton tandis que les réceptacles du bras de mesure (13) ou les sondes dynamométriques reposent sur le rebord libre opposé (12) desdites poutrelles en double T (11) et sont maintenus immobilisés directement sur la dalle de béton à l'aide d'éléments d'appui (14).

3. Dispositif de mesure selon la revendication 2, **caractérisé en ce qu'**il est prévu que le cadre de base (4) soit un cadre porteur (5) formé de montants longitudinaux et transversaux et qu'un cadre récepteur (7) assemblé à la dalle en béton (9) en l'entourant soit affecté à la plate-forme de travail (6).

4. Dispositif de mesure selon les revendications 1, 2 ou 3 **caractérisé en ce que** les logements du bras de mesure (13) ou les sondes dynamométriques sont aménagés dans le même plan horizontal (X-X) à proximité immédiate du véhicule (F) positionné sur la plate-forme de travail (6) au niveau de chaque côté, de l'avant et de l'arrière dudit véhicule.

5. Dispositif de mesure selon les revendications 1, 2, 3 ou 4 **caractérisé en ce que** les réceptacles du bras de mesure (13) ou les sondes dynamométriques reçoivent le pied (15) du bras de mesure (M) qui peut être immobilisé dans le réceptacle du bras de mesure (13) par un dispositif de bridage et de fixation (S) tout en étant bloqué en rotation au moyen d'un tenon d'arrêt (22) et positionné très précisément à l'aide de deux tenons de fixation (20, 21) se faisant face sur un cercle (K), sachant que le tenon d'arrêt (22) et les tenons de fixation (20, 21) s'engagent dans des alésages correspondants (20a, 21a, 22a) sur le pied du bras de mesure (15).

6. Dispositif de mesure selon la revendication 5, **caractérisé en ce que** des alésages (20a, 21a) percés dans le pied du bras de mesure (15) pour y recevoir les tenons de fixation (20, 21) sont légèrement décalés à cette fin par rapport auxdits tenons de fixation, de sorte que les tenons de fixation (20, 21) sont disposés dans les alésages (20a, 21a) en serrant et que le pied du bras de mesure (15) peut être tiré et enfoncé dans le réceptacle du bras de mesure (13) ou la sonde dynamométrique par le biais du dispositif de serrage et de fixation pneumatique (S) à l'aide d'éléments de bridage (S1, S2) aménagés en vis-à-vis.

7. Dispositif de mesure selon la revendication 1, **caractérisé en ce que** le véhicule (F) stationné sur la plate-forme de travail (6) présente des jauges-tampons mises en place sur sa surface inférieure pour relever des points dans un système de coordonnées du véhicule (K1) qui peut être regroupé avec le système de coordonnées (K2) des réceptacles du bras de mesure (13) ou de la plate-forme de travail (6) et avec le système de coordonnées (K3) du bras de mesure (M) dans un système de coordonnées global du véhicule et que les données de mesure sont éditables.
